# EUROPÄISCHE PATENTSCHRIFT

(11) **EP 0 738 973 B1**
(45) Veröffentlichungstag und Bekanntmachung des Hinweises auf die Patenterteilung: **20.06.2001**
(21) Anmeldenummer: 96101873.6
(22) Anmeldetag: 09.02.1996
(51) Int. Cl.: G06F 11/16, B61L 3/12, H04L 1/22, H04L 1/00, H04B 5/00, G08B 29/16, H03M 13/00

(54) **Datenübertragungsverfahren und Vorrichtung**
Data transfer method and device
Procédé de transfert de données et dispositif de transfert de données

(30) Priorität: 13.04.1995 CH 108895
(43) Veröffentlichungstag der Anmeldung: 23.10.1996
(73) Patentinhaber: Siemens Schweiz AG, 8047 Zürich (CH)
(72) Erfinder: Windisch, Arthur, D-8184 Bachenbülach (DE); Zünd, Urs, CH-8307 Effretikon (CH)
(74) Vertreter: Zedlitz, Peter, Dipl.-Inf.

(56) Entgegenhaltungen:
- EP-A- 0 301 501
- EP-A- 0 424 664
- EP-A- 0 659 001
- US-A- 4 456 997
- US-A- 5 166 933

## Beschreibung

Die vorliegende Erfindung betrifft ein Datenübertragungsverfahren und eine entsprechende Vorrichtung nach dem Oberbegriff der Patentansprüche 1 und 2 bzw. 10 und 11.

In technischen Bereichen, in denen strenge sicherheitstechnische Bestimmungen einzuhalten sind, wird normalerweise eine fehlerfreie Datenübertragung bzw. eine Datenübertragung mit entsprechend hoher Fehleroffenbarung gefordert. In der Anlagentechnik soll z.B. sichergestellt werden, dass Prozesse fehlerfrei ablaufen, von denen insbesondere die Sicherheit von Personen abhängt. Signale, die zur Steuerung dieser Prozesse vorgesehen sind, sollen daher fehlerfrei übermittelt werden. Beim Auftreten von fehlerhaften Übertragungen soll das Fehlerereignis offenbart werden, so dass die notwendigen Massnahmen zur kontrollierten Weiterführung der gesteuerten Prozesse getroffen werden können. Der verkehrstechnisch kontrollierte Ablauf des öffentlichen und privaten Verkehrs entspricht ebenfalls einem gesteuerten Prozess, der in verschiedene grössere und kleiner Teilbereiche segmentiert ist. Die Signale zur Steuerung des Verkehrs müssen daher normalerweise auch den oben beschriebenen Anforderungen genügen. Z.B. soll in der Eisenbahntechnik sichergestellt werden, dass die Steuersignale an die Fahrzeuge immer korrekt übertragen oder dass Übertragungsfehler gemeldet werden. Besonders kritisch sind dabei Übertragungsfehler, die eine erhöhte Gefährdung hervorrufen (wrong side failures). Im Gegensatz dazu sind Fehler weniger kritisch, die z.B. den Verkehr blockieren, ohne dass Verkehrsteilnehmer gefährdet werden. Im ersten Fall wird z.B. anstelle eines Rotlichtsignals ein Grünlichtsignal übermittelt. Im zweiten Fall wird der Verkehr durch ein permanent leuchtendes Rotlichtsignal blockiert.

Aus F. Gertler, H.-J. Stolzenberg, Das Zugbeeinflussungssystem ZUB 123, SIGNAL + DRAHT, 86 (1994), ist die Verwendung von mehreren adressierbaren Streckentelegrammen bekannt, die in einer Gleiskoppelspule abgelegt sind. Bei einer Zugpassage kann ein einzelnes Telegramm abgerufen und an den vorbeifahrenden Zug übertragen werden. Aus Gründen der Sicherheit sind die zur Aufnahme der Telegramme vorgesehenen Speicherbausteine in jeder Gleiskoppelspule zweifach redundant vorgesehen. Damit diese Kommunikationssysteme ihre Arbeit dauerhaft erfüllen können und vereinzelt nicht selbst Gefährdungen hervorrufen, wird für diese Systeme ein hoher Sicherheitsstandard gefordert, der durch die Anwendung entsprechender Normen (z.B. PrEn50126, PrEn50127, PrEn50128, DIN 19250, Mü8004, etc.) erzielt und nachgewiesen werden kann.

Zur fehlerfreien bzw. fehleroffenbarenden Datenübertragung wird z.B. eine Kanalcodierung vorgesehen, wie sie in P. Bocker, Datenübertragung, Springer-Verlag, Berlin 1978, Band 1, Kapitel 2.4.4, Seiten 45-48 beschrieben ist. Um Fehler, die durch Störungen auf der Übertragungsstrecke entstanden sind, erkennen oder gar korrigieren zu können, werden die Codewörter eines Quellencodierers durch einen Kanalcodierer unter Hinzufügung von Redundanz codiert. Durch den Kanalcodierer wird zur Gewährleistung der Fehlererkennung ein Hamming-Abstand von mindestens zwei vorgesehen. Anstelle einer Erhöhung der Redundanz durch entsprechende Codierung in einem Kanal, kann eine Erhöhung der Redundanz erzielt werden, indem die Nutzdaten parallel in zwei Kanälen übertragen werden. Fehlerhaft übertragene Daten können daher durch einen Vergleich der in beiden Kanälen übertragenen Daten identifiziert werden. Gegenüber der Übertragung der Daten in nur einem Kanal kann dadurch eine deutlich verbesserte Fehleroffenbarung erzielt werden.

In EP 0 424 664 A2 ist ein Verfahren zur signaltechnisch sicheren Übertragung von Steuerungsinformation angeben: Jeder Steuerungsinformation ist ein Steuerungsdatensatz zugeordnet, der in zwei Festwertspeichern bis auf eine Speicherkennung identisch ist. Diese Steuerungsdatensätze werden unabhängig auf ein Fahrzeug übertragen und nur dann weiter verwendet, wenn die zugrundeliegende Steuerungsinformation gleich und die Speicherkennung verschieden ist.

Nachteilig bei einigen dieser Verfahren mit zweikanaliger Datenübertragung ist, dass Übertragungsfehler nicht oder nur ungenügend offenbart werden, wenn von den beiden Kanälen identische Daten abgegeben werden. Beispielsweise werden zu einem Zeitpunkt t1 Signalisierungsdaten für "FAHRT' abgegeben. Durch einen Defekt werden die Daten zu einem späteren Zeitpunkt t2 im ersten Kanal eingefroren. Nach mehreren Signalwechseln passiert anschliessend ein Personenzug die Signalstelle, die wiederum "FAHRT" signalisiert. Ein Vergleich der von den beiden Kanälen übertragenen Daten offenbart keinen Fehler. Durch ein Einfrieren des zweiten Kanals mit dem Signalbegriff "FAHRT" oder durch eine fehlerhafte Datenübertragung würde daher eine Situation geschaffen, die nicht als fehlerhaft offenbart wird und die daher zu Personen- und Materialschaden führen könnte.

Der vorliegenden Erfindung liegt daher die Aufgabe zugrunde, ein Übertragungsverfahren sowie eine Übertragungsvorrichtung anzugeben, durch die das Einfrieren von Daten und damit die Weiterverwendung von übertragenen aber nicht mehr aktueller Daten, sowie das Einfrieren eines Kanals und Übertragungsfehler vollständig bzw. mit einer sehr hohen und in der praktischen Anwendung genügenden Wahrscheinlichkeit offenbart werden.

Diese Aufgabe wird durch die in den Patentansprüchen 1 und 2 bzw. 10 und 11 angegebenen Massnahmen gelöst. Vorteilhafte Ausgestaltungen der Erfindung sind in weiteren Ansprüchen angegeben.

Das erfindungsgemässe Verfahren gewährleistet eine fehleroffenbarende Übertragung von Daten. Mit weiteren Massnahmen können aufgetretene und offenbarte Fehler korrigiert werden. Die erfindungsgemässe Vorrichtung erlaubt die Durchführung des Verfahrens mit verhältnismässig einfachen Massnahmen.

Die Erfindung wird nachfolgend anhand einer Zeichnung beispielsweise näher erläutert. Dabei zeigt:
- Fig. 1: eine grundsätzliche Ausführung der erfindungsgemässen Übertragungsvorrichtung,
- Fig. 2: eine mögliche Anwendung dieser Vorrichtung,
- Fig. 3: eine erweiterte Ausführung der erfindungsgemässen Übertragungsvorrichtung und
- Fig. 4: einen für die erfindungsgemässe Vorrichtung vorgesehenen Komparator.

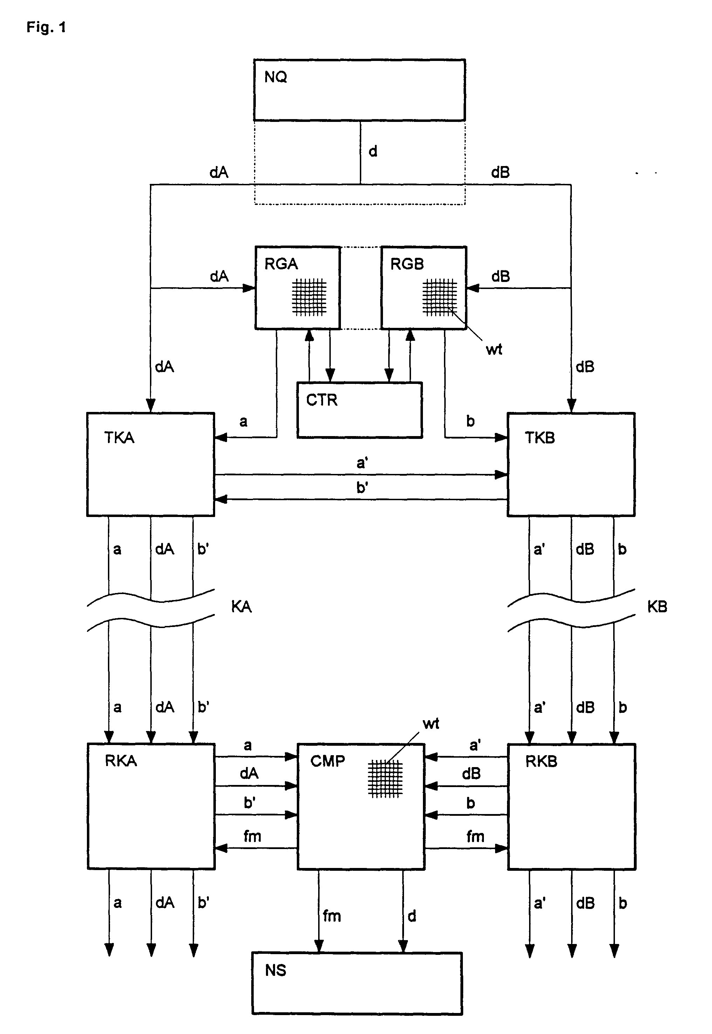

Fig. 1 zeigt die erfindungsgemässe Vorrichtung, die zur Übertragung von Nutzdaten d von einer Nachrichtenquelle NQ zu einer Nachrichtensenke NS vorgesehen ist. Die von der Nachrichtenquelle NQ abgegebenen Nutzdaten d werden über einen ersten Sender TKA, einen ersten Kanal KA zu einem ersten Empfänger RKA und parallel dazu über einen zweiten Sender TKA, einen zweiten Kanal KB zu einem zweiten Empfänger RKA übertragen. Die Nutzdaten d, die im ersten Kanal KA übertragen werden, sind mit dA und dieselben Nutzdaten d, die im zweiten Kanal KB übertragen werden, sind mit dB bezeichnet.

Vom ersten und zweiten Empfänger RKA bzw. RKB werden die übertragenen Nutzdaten dA bzw. dB einem Komparator CMP zugeführt, in dem geprüft wird, ob die Nutzdaten dA und dB fehlerfrei übertragen wurden. Eine Abweichung zwischen den Nutzdaten dA und dB, wird im Komparator CMP durch Differenzbildung erkannt und als Fehler registriert. Falls die Nutzdaten dA und dB übereinstimmen, wird nach diesem Verfahren kein Fehler festgestellt. Wie eingangs erläutert führt dies zu Problemen, falls die Nutzdaten dA, dB in einem oder in beiden Kanälen eingefroren sind und nicht mehr den aktuellen, sondem einen früheren Stand anzeigen. Dieses Einfrieren kann insbesondere dann auftreten, wenn im Sender TKA, TKB, im Empfänger RKA, RKB und/oder innerhalb des Übertragungskanals KA, KB Einheiten zur Zwischenspeicherung der zu übertragenden Nutzdaten dA, dB vorgesehen sind.

Zur Beseitigung dieses Problems ist in der in Fig. 1 gezeigten Übertragungsvorrichtung ein einziger oder für jeden Kanal KA, KB je ein Referenzdatengenerator RGA bzw. RGB vorgesehen, dem die zu übertragenden Nutzdaten dA bzw. dB zugeführt werden und der dazu korrespondierende Referenzdaten a, b an den ersten bzw. zweiten Sender TKA, TKB abgibt. Über die beiden Kanäle KA, KB werden daher nicht nur die Nutzdaten dA und dB sondern auch die zugehörigen Referenzdaten a bzw. b zum Komparator CMP übertragen. Durch Laufzeitunterschiede, die zwischen der Nachrichtenquelle NQ und den Referenzdatengeneratoren RGA bzw. RGB entstehen, können die Referenzdaten a, b zwischenzeitlich unterschiedliche Werte aufweisen.

Zur Bildung der Referenzdaten sind die Referenzdatengeneratoren RGA, RGB mit z.B. einem Zähler CTR verbunden, der die absolute Ortszeit, die relative Zeitdauer seit dem letzten Wechsel eines Signalbegriffs, die Dauer der Präsenz des vorangegangenen Signalbegriffs oder der die Anzahl Wechsel der Zustände oder Signalbegriffe, die seit Inbetriebnahme der Übertragungsvorrichtung aufgetreten sind, zählt. Mit dem Zähler CTR oder einer Messvorrichtung kann jedoch auch eine weitere veränderliche Grösse erfasst werden, die aus dem Prozess abgeleitet werden kann. Da die Messung der absoluten oder relativen Zeitperioden mit grösserem Aufwand verbunden ist, werden bevorzugt die Wechsel der Signalbegriffe gezählt. D.h. die in den Referenzdatengeneratoren RGA, RGB zwischengespeicherten Nutzdaten werden jeweils mit den neu eintreffenden Nutzdaten verglichen, wonach Änderungen im Zähler CTR registriert werden. Ein zu übertragender Datensatz der Daten dA, dB wird daher mit den aktuellen Referenzdaten a, b bzw. mit dem jeweiligen Zählerstand kombiniert. Den Referenzdatengeneratoren RGA, RGB und dem Komparator CMP (bzw. den empfangsseitig vorgesehenen Komparatoren CMP-A, CMP-B, CMP-AB) ist die Menge der wählbaren Referenzdaten, bzw. der entsprechende Wertebereich bekannt, wobei diese Menge definierte Untermengen enthalten kann, welche disjunkt sein können, um z.B. mit dieser Unterteilung in Untermengen fehlerfreie und fehlerbehaftete Zustände markieren zu können. Durch die Wahl eines Wertes aus der Untermenge der fehlerbehafteten Zustände kann der betreffende Referenzdatengenerator RGA, RGB einen sendeseitig bereits offenbarten Fehler anzeigen. Durch den Komparator CMP wird empfangsseitig daher festgestellt, ob die in den physikalischen oder logischen Kanälen KA, KB übertragenen Referenzdaten a, b einem Wert aus dem definierten Wertebereich entsprechen, der einen fehlerfreien oder fehlerbehafteten Zustand anzeigt. Falls der Wert im definierten Wertebereich nicht enthalten ist, liegt hingegen ein Fehler in der Übertragung vor. Die vorgegebenen Wertebereiche sind z.B. in Tabellen wt vorgesehen, die in den Referenzdatengeneratoren RGA, RGB und Komparatoren CMP abgelegt sind.

Bevorzugt werden die Referenzdaten a des ersten Kanals KA zum zweiten Kanal KB und die Referenzdaten b des zweiten Kanals KB zum ersten Kanal KA kopiert. Dazu werden diese als a' und b' bezeichneten Daten, die, falls kein Übertragungsfehler vorliegt, identisch zu den Referenzdaten a bzw. b sind, zwischen den beiden Sendern TKA und TKB ausgetauscht und über den zugehörigen Kanal KA bzw. KB und den Empfänger RKA bzw. RKB zum Komparator CMP übertragen. Bei einigen Verfahren, bei denen z.B. die absolute Ortszeit zur Bildung der Referenzdaten verwendet wird, kann es genügen, wenn nur die Referenzdaten eines Kanals zum Nachbarkanal kopiert werden. Beispielsweise werden nur die Referenzdaten a des ersten Kanals KA zum zweiten Kanal KB kopiert.

Zur Offenbarung allfällig aufgetretener Fehler bzw. zur Überprüfung der übermittelten Nutzdaten d werden die in beiden Kanälen KA und KB übertragenen Nutzdaten dA und dB, wie bereits oben erwähnt, miteinander verglichen. Zur Überprüfung des Zustandes der beiden Kanäle KA und KB können erfindungsgemäss die Referenzdaten a und a' und/oder b und b' miteinander verglichen werden, die identisch zueinander oder eineindeutig einander zuordenbar sein sollten. Zusätzlich oder alternativ können die Referenzdaten a und b oder a' und b' miteinander verglichen werden. Durch diese Massnahmen können zusätzlich Fehlfunktionen der Referenzdatengeneratoren RGA und RGB oder das Einfrieren der von der Datenquelle NQ übertragenen Nutzdaten dA oder dB ermittelt werden.

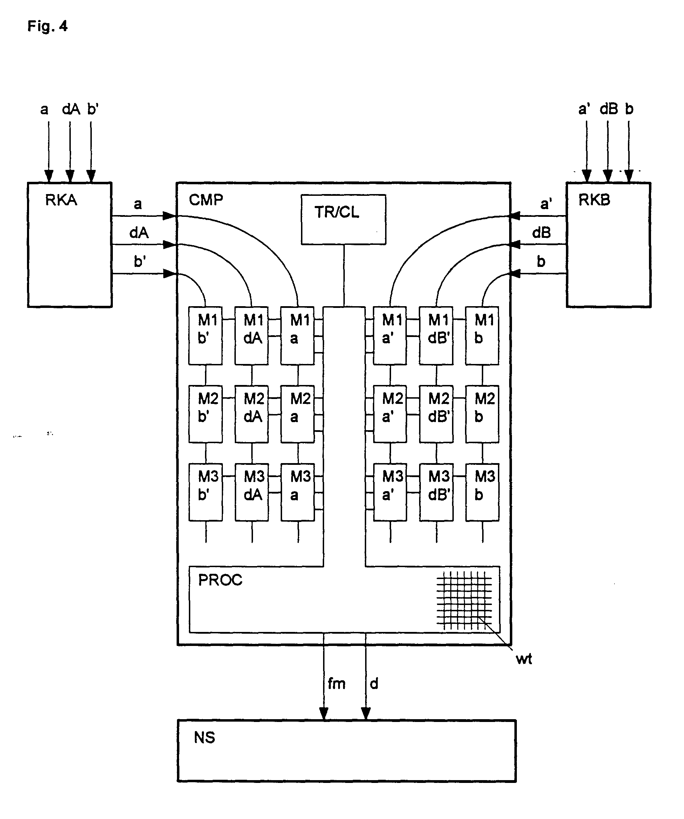

Beim Vergleich der Nutzdaten dA und dB und der Referenzdaten a und b, a und a', etc. können aufgrund von Laufzeitverschiebungen zeitweilig Differenzen zwischen diesen Daten auftreten. Z.B. kann ein Signalisierungswechsel in einem der Kanäle KA, KB mit einer Verzögerung von einer Millisekunde auftreten. Der Vergleich der Nutzdaten dA und dB und der Referenzdaten a und b, a und a', etc. wird daher bevorzugt innerhalb von mehreren Taktzyklen sequentiell durchgeführt. Falls nach mehreren Vergleichen keine Übereinstimmung erzielt wird, wird vom Komparator CMP ein Fehler an die Empfänger RKA, RKB oder an die Nachrichtensenke NS gemeldet. Falls beim beschriebenen Datenvergleich kein Fehler auftritt, werden die korrekt übertragenen Nutzdaten d weitergeleitet bzw. der Nachrichtensenke NS zugeführt. Laufzeitunterschiede können auf diese Weise korrigiert werden. Im Komparator CMP werden dazu pro Kanal KA, KB für alle zu überprüfenden Daten vorzugsweise mehrere Speichereinheiten vorgesehen. Z. B. werden für die Referenzdaten a und a' je drei in Serie geschaltete Speichereinheiten vorgesehen, in die die Referenzdaten a und a' sequentiell eingeschrieben werden. Nach drei Sequenzen, die zu den Zeitpunkten t1, t2 und t3 erfolgt sind, sind die diesen Zeitpunkten t1, t2 und t3 zugehörigen Werte aₜ₁, aₜ₂ und aₜ₃ bzw. a'ₜ₁, a'ₜ₂ und a'ₜ₃ der Referenzdaten a und a' abgespeichert. Durch den Komparator CMP wird anschliessend überprüft, ob wenigstens zwei einander nachfolgende Wertepaare aₜ₁, a'ₜ₁, und aₜ₂, a'ₜ₂ oder aₜ₂, a'ₜ₂, und aₜ₃, a'ₜ₃ miteinander übereinstimmen. Ein für diese Massnahmen geeigneter Komparator CMP ist in Fig. 4 dargestellt. Für alle zu überprüfenden Nutz- und Referenzdaten a, dA, b', a', dB und b sind darin je drei in Serie geschaltete Speichereinheiten M1a, M2a, M3a, M1dA, ..., M1b, M2b und M3b vorgesehen, in die die übertragenen Nutz- und Referenzdaten a, dA, b', a', dB und b sequentiell einschreibbar sind. Durch einen vorzugsweise mit einer Wertetabelle wt versehenen und mit einem Taktgenerator TR/CL verbundenen Prozessor PROC können die einander entsprechenden Wertepaare aus den Speichereinheiten M1a,..., M3b ausgelesen und überprüft werden. Falls die Speichereinheiten M1a, M2a und M1a', M2a' z.B. unterschiedliche Werte enthalten liegt entweder ein Fehler oder ein Laufzeitunterschied in der Übertragung vor. Nach den nächsten Taktzyklen, mit denen weitere Daten sequentiell in die Speichereinheiten M1a,..., M3b eingelesen werden, sollten die durch Laufzeitunterschiede verzögerten Daten beim Komparator CMP eingetroffen sein, so dass die Speichereinheiten M1a, M2a und M1a', M2a' nun zueinander entsprechende Daten aufweisen sollten. Falls innerhalb einer vorgesehenen Zeitdauer keine Übereinstimmung erzielt wird, so wird vom Komparator CMP ein Fehler gemeldet. Die durch die Speichereinheiten M gebildeten Ketten können n Kettenglieder aufweisen, von denen jeweils m zur Prüfung hinzugezogen werden. Im obenerwähnten Beispiel sind pro Kette n gleich drei Speichereinheiten M vorgesehen, von denen die Inhalte von m gleich zwei Speichereinheiten M übereinstimmen müssen. Mit Ketten, die nur eine Speichereinheit M enthalten, ist hingegen nur eine eingeschränkte Überprüfung der Daten möglich. Zur Festlegung der Überprüfungszeiträume können vom Taktgenerator TR/CL zusätzliche Zeitsignale abgegeben werden.

Falls die Nutzdaten dA und dB und die Referenzdaten a, b, a' und b' noch weiter zu übertragen sind, so werden in den Empfängern RKA, RKB zusätzlich z.B. mit Sendeverstärkem versehene Einheiten vorgesehen, über die die Nutzdaten dA und dB und die Referenzdaten a, b, a und a' einer weiteren zweikanaligen Übertragungsstrecke zugeführt werden. Mit diesen Einheiten wird vorteilhaft auch die Vergrösserung oder Verringerung des Datenflusses bewirkt, falls von den Empfängern RKA, RKB Daten z.B. an periphere Module abgegeben, oder von diesen Daten zugeführt werden.

Zur Korrektur von Übertragungsfehlem sind verschiedene Massnahmen möglich. Die Verwendung eines Fehlerkorrekturcodes, z.B. eines redundanten Codes mit einem Hamming-Abstand von mindestens drei erlaubt die Korrektur von Fehlern, die bei der Datenübertragung entstanden sind. Diese Fehlerkorrektur wird vorzugsweise im Komparator CMP vorgenommen, bevor die Nutzdaten dA und dB und die Referenzdaten a, b, a' und b' beider Kanäle KA, KB miteinander verglichen werden.

Beim Betrieb von verkehrstechnischen Anlagen darf ferner davon ausgegangen werden, dass eine unveränderte Signalisierung im Verhältnis zu den Taktzyklen der Übertragungsvorrichtung normalerweise lange andauert. Die Daten derselben Signalisierung werden über die Übertragungsvorrichtung daher mehrmals übertragen. In den Empfängern RKA, RKB werden die Daten dA und dB und die Referenzdaten a, b, a' und b' daher zwischengespeichert, um festzustellen, ob z.B. mindestens zwei aufeinanderfolgende einer Signalisierung entsprechende Datensätze übereinstimmen. Falls die validierten Daten beider Kanäle KA, KB danach nicht übereinstimmen, wird eine Fehlermeldung fm vom Komparator CMP an die Empfänger RKA, RKB abgegeben, um dies zu offenbaren; anschliessend wird der Prozess fortgesetzt.

Durch die Einführung eines dritten Kanals könnte ein 2-aus-3-System geschaffen werden, durch das Fehler, die in einem der drei Kanäle auftreten, korrigiert werden können. Dazu würden die Datensätze aller drei Kanäle verglichen und nur diejenigen weiterverarbeitet, die von wenigstens zwei der drei Kanäle übermittelt wurden. 2-aus-3-Systeme sind z.B. in Zuverlässigkeit, Verfügbarkeit und Sicherheit in der Elektronik, Vogel Verlag, Würzburg 1979 auf Seiten 156 ff beschrieben. Darin beschrieben sind ferner m-aus-n-Systeme, die einen höheren Sicherheitsgrad gewährleisten, jedoch nur mit einem grösseren Aufwand realisierbar sind.

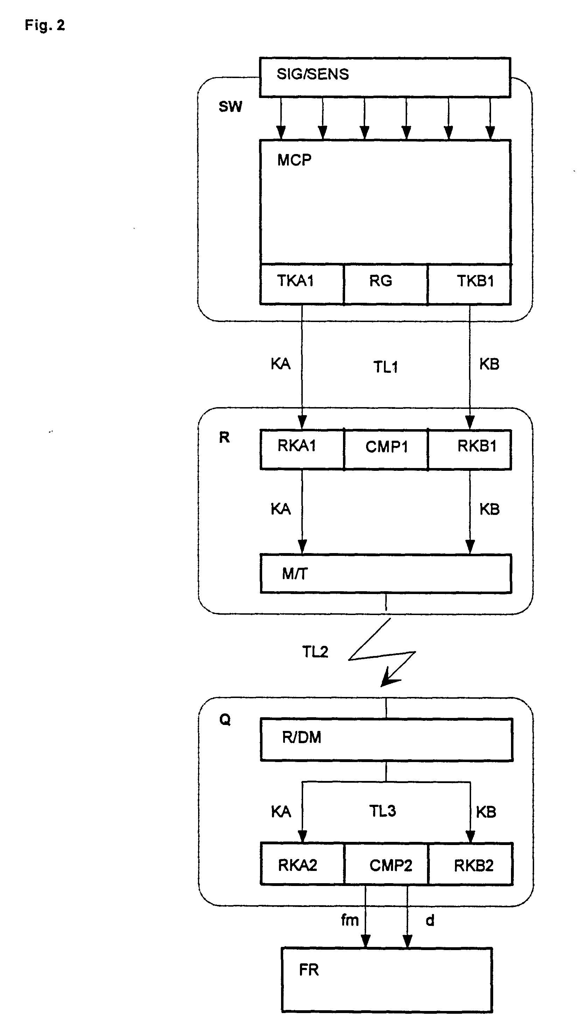

In Fig. 2 ist eine erfindungsgemässe Übertragungsvorrichtung dargestellt, die es erlaubt, Nutzdaten von einem erdgebundenen Signalposten, z.B. einem Stellwerk SW an eine in einem Fahrzeug vorgesehene Abfragestation Q zu übermitteln, von der sie z.B. an einen Leitrechner FR abgegeben werden. Dem Stellwerk SW werden Signale z.B. von einer Leitstelle, von Fahrzeugen oder von Sensoren über eine Schnittstellenbaugruppe SIG/SENS zugeführt. In einem der Schnittstellenbaugruppe SIG/SENS angeschlossenen Prozess MCP, der vorzugsweise mit einem Prozessor realisiert wird, werden die empfangenen Signale aufbereitet und an die zwei Sender TKA1, TKB1 sowie an einen mit den Sendern TKA1, TKB1 verbundenen Referenzdatengenerator RG abgegeben. Vom Stellwerk SW bzw. den Sendern TKA1, TKB1 werden die Daten über eine Übertragungsleitung TL1, welche die beiden Kanäle KA und KB enthält, einer an einem Streckenpunkt vorgesehenen HF-Sendestation R bzw. darin vorgesehenen und mit einem Komparator CMP1 verbundenen Empfängern RKA1, RKB1 zugeführt. Soweit entspricht diese Übertragungsvorrichtung prinzipiell der in Fig. 1 beschriebenen Vorrichtung. Die Daten werden anschliessend über die durchgezogenen Kanäle KA, KB einer Sendestufe M/T zugeführt, darin vorzugsweise auf ein Trägersignal moduliert und über einen Luftspalt TL2 von der HF-Sendestation R zu einer Empfangsstation Q, bzw. zu einem darin vorgesehenen Empfangseinheit R/DM übertragen, in der die übertragenen Signale demoduliert und über die Übertragungsleitung TL3 bzw. die weiter durchgezogenen Kanäle KA, KB zwei weiteren mit einem zweiten Komparator CMP2 verbundenen Empfängern RKA2, RKB2 zugeführt werden. Die korrekt übertragenen Daten und allfällige Fehlermeldungen werden vom Komparator CMP2 anschliessend an den Leitrechner FR abgegeben.

In Fig. 2 ist dargestellt, dass die erfindungsgemässe Lösung in der zwischen dem Stellwerk SW und der HF-Sendestation R vorgesehenen Übertragungsleitung TL1 durch zwei physikalisch getrennte Kanäle und im Luftspalt TL2 zwischen der HF-Sendestation R und der Empfangsstation Q durch zwei lediglich logisch getrennte Kanäle realisierbar ist. Logisch getrennte Kanäle werden z.B. geschaffen, indem die Daten der vorhandenen Kanäle im Zeitmultiplexbetrieb in Zeitschlitzen abwechslungsweise über eine Leitung übertragen werden. An diese Leitung sind dann nur ein Sender und ein Empfänger angeschlossen, die alternierend die Daten der vorhandenen Kanäle absenden bzw. empfangen.

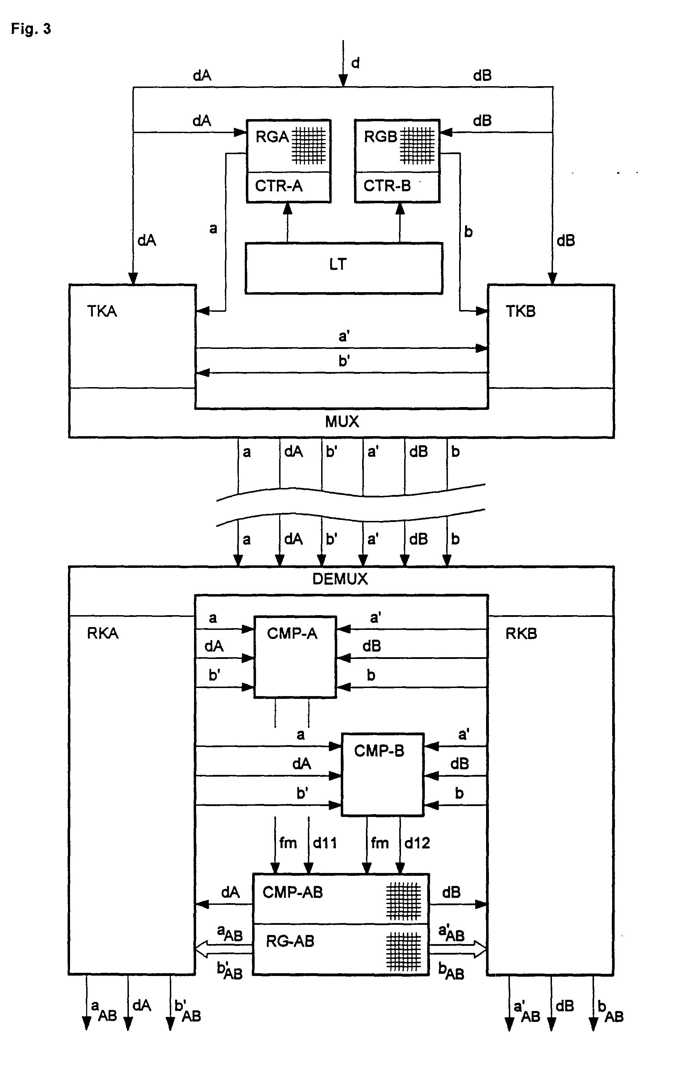

In Fig. 3 sind die Sender TKA und TKB über zwei getrennte logische Kanäle bzw. über einen Multiplexer MUX, eine Übertragungsleitung und einen Demultiplexer DEMUX mit den Empfängern RKA, RKB verbunden, welche die übertragenen Daten getrennt an zwei Komparatoren CMP-A, CMP-B abgeben, welche diese auf Korrektheit überprüfen. Die Ausgänge der Komparatoren CMP-A, CMP-B sind mit einem dritten Komparator CMP-AB verbunden, der die von den Komparatoren CMP-A, CMP-B ermittelten Ergebnisse vergleicht und dazu korrespondierende Referenzdaten a_{AB}, b_{AB} an die Empfänger RKA, RKB retourniert oder der dazu korrespondierende Nutzdaten d und Fehlermeldungen fm an die Nachrichtensenke NS abgibt. Durch diese Massnahme werden Fehler offenbart, die beim Ausfall eines Komparators CMP-A oder CMP-B entstehen können. Die an die Empfänger RKA, RKB retournierten Referenzdaten a_{AB}, b_{AB} werden vorzugsweise in einem mit dem dritten Komparator CMP-AB verbundenen Referenzdatengenerator RG-AB ermittelt. Der Komparator CMP-AB und der Referenzdatengenerator RG-AB können zur Erfüllung ihrer Aufgaben auf eine gemeinsame oder je auf eine eigene Wertetabelle zugreifen.

Die Referenzdatengenerator RGA, RGB sind getrennt vorgesehen und mit einem Zähler CTR-A bzw. CTR-B verbunden, die z.B. mit einem internen oder externen Zeitnormal (Funkuhr) verbunden sind.

Die erfindungsgemässe Lösung erlaubt ferner, unter Wahrung einer hohen Fehleroffenbarungswahrscheinlichkeit, die Übertragung von unterschiedlichen Nutzdaten dA, dB in den Kanälen KA, KB, wodurch die Kapazität der Übertragungsstrecke verdoppelt wird. Die Überprüfung der übertragenen Daten durch einen Vergleich der in beiden Kanälen übertragenen Nutzdaten dA, dB entfällt für diesen Fall.

Vorzugsweise wird in den übertragenen Nutzdaten dA und dB ferner ein Prüfwort oder eine Checksumme vorgesehen, die empfangsseitig durch einen Komparator CMP geprüft wird. Das Prüfwort wird dabei vollständig oder partiell sich ergänzend in den Nutzdaten dA und dB vorgesehen. Im zweiten Fall werden die in den übertragenen Nutzdaten dA und dB vorhandenen Teile des Prüfwortes durch den Komparator CMP vorerst zusammengefügt.

## Patentansprüche

1. Verfahren zur Übertragung von Nutzdaten (d; dA, dB) von einer Nachrichtenquelle (NQ) zu einer Nachrichtensenke (NS) von wenigstens einem Sender (TKA, TKB) parallel über eine Übertragungsstrecke mit wenigstens zwei Kanälen (KA, KB) zu wenigstens einem Empfänger (RKA, RKB), wobei die zu übertragenden Nutzdaten ausserdem zu wenigstens einem Referenzdatengenerator (RG, RGA, RGB) zugeführt werden, der an den Sender (TKA, TKB) Referenzdaten (a, b) zur Übertragung über die Kanäle (KA, KB) abgibt und wobei die übertragenen Daten (d, dA, dB) vom Empfänger einem Komparator (CMP) zugeführt werden, **dadurch gekennzeichnet,** dass die vom Referenzdatengenerator (RG, RGA, RGB) abgegebenen Referenzdaten (a, b) in erste (a) und zweite Referenzdaten (b) gegliedert sind und abhängig von den Nutzdaten (d; dA, dB) und abhängig von einem Ereignis bestimmt sind, das beim Eintreffen der zugehörigen Nutzdaten (d; dA, dB) eingetreten ist, dass über den ersten Kanal (KA) erste (a) und zweite Referenzdaten (b) und über den zweiten Kanal (KB) zweite (b) und erste Referenzdaten (a) übertragen werden, und dass die an den Empfänger (RKA, RKB) übertragenen Referenzdaten (a, a'; b, b') ebenfalls dem Komparator (CMP) zugeführt werden, der die Referenzdaten (a, a'; b, b') miteinander vergleicht oder auf Korrektheit überprüft.

2. Verfahren zur Übertragung von Nutzdaten (d; dA, dB) von einer Nachrichtenquelle (NQ) zu einer Nachrichtensenke (NS) von wenigstens einem Sender (TKA, TKB) parallel über eine Übertragungsstrecke mit wenigstens zwei Kanälen (KA, KB) zu wenigstens einem Empfänger (RKA, RKB), wobei die zu übertragenden Nutzdaten ausserdem zu wenigstens einem Referenzdatengenerator (RG, RGA, RGB) zugeführt werden, der an den Sender (TKA, TKB) Referenzdaten (a, b) zur Übertragung über die Kanäle (KA, KB) abgibt und wobei die übertragenen Daten (d, dA, dB) vom Empfänger einem Komparator (CMP) zugeführt werden, **dadurch gekennzeichnet**, dass die vom Referenzdatengenerator (RG, RGA, RGB) abgegebenen Referenzdaten (a, b) in erste (a) und zweite Referenzdaten (b) gegliedert sind und abhängig von den Nutzdaten (d; dA, dB) und abhängig von einem Ereignis bestimmt sind, das beim Eintreffen der zugehörigen Nutzdaten (d; dA, dB) eingetreten ist, dass über den ersten Kanal (KA) erste Referenzdaten (a) und über den zweiten Kanal (KB) zweite Referenzdaten (b) übertragen werden, und dass die an den Empfänger (RKA, RKB) übertragenen Referenzdaten (a, b) ebenfalls dem Komparator (CMP) zugeführt werden, der die Referenzdaten (a, b) miteinander vergleicht oder auf Korrektheit überprüft.

3. Verfahren nach Anspruch 1 oder 2, **dadurch gekennzeichnet**, dass physikalisch nur ein Sender (TK) und nur ein Empfänger (RK) vorgesehen sind und dass die beiden Kanäle durch Zeitmultiplexbetrieb in dazu vorgesehenen Zeitschlitzen gebildet werden.

4. Verfahren nach Anspruch 1 oder 2, **dadurch gekennzeichnet**, dass der erste Kanal (KA) einem ersten Sender (TKA) und der zweite Kanal (KB) einem zweiten Sender (TKB) zugeordnet ist.

5. Verfahren nach einem der Ansprüche 1 bis 4, **dadurch gekennzeichnet**, dass im Komparator (CMP) jene übertragenen Referenzdaten (a, a', b, b') paarweise verglichen oder auf Korrektheit überprüft werden, die nicht im gleichen Kanal übertragen wurden.

6. Verfahren nach einem der Ansprüche 1 bis 5, **dadurch gekennzeichnet**, dass die Referenzdaten (a, b) im Referenzdatengenerator (RG; RGA, RGB) in Abhängigkeit des beim Eintreffen der Nutzdaten (dA, dB) gültigen Standes eines Zählers (CTR) generiert werden, welcher die absolute Ortszeit, die relative Zeitdauer seit dem letzten Wechsel eines Signalbegriffs, die Dauer der Präsenz eines vorangegangenen Signalbegriffs, die Anzahl Wechsel von in den Nutzdaten enthaltenen Zuständen oder die Anzahl Wechsel von Signalbegriffen zählt, die seit Inbetriebnahme der zugrunde liegenden Übertragungsvorrichtung aufgetreten sind.

7. Verfahren nach Anspruch 6, **dadurch gekennzeichnet**, dass ein Wertebereich für die Referenzdaten (a, b) vorgesehen ist, aus dem in den Referenzdatengeneratoren (RG; RGA, RGB) jeweils Werte ausgewählt werden, die festgestellten fehlerfreien und/oder fehlerbehafteten Zuständen entsprechen und dass nach der Datenübertragung durch den Komparator (CMP) geprüft wird, ob die übertragenen Referenzdaten (a, b) einem Wert des vorgegebenen Wertebereichs entsprechen, der einen fehlerfreien oder fehlerbehafteten Zustand anzeigt.

8. Verfahren nach einem der Ansprüche 1 bis 7, **dadurch gekennzeichnet**, dass in beiden Kanälen (KA, KB) identische Nutzdaten (dA, dB) übertragen und dem Komparator (CMP) zugeführt werden, der diese identischen Nutzdaten (dA, dB) miteinander vergleicht oder auf Korrektheit überprüft und/oder dass in den Nutzdaten (dA, dB) ergänzend ein Prüfwort vorgesehen ist, das durch den Komparator (CMP) geprüft wird.

9. Verfahren nach einem der Ansprüche 1 bis 8, **dadurch gekennzeichnet**, dass im Komparator (CMP) für wenigstens einen Teil der zu überprüfenden Nutz- und Referenzdaten (dA, dB, a, b, a', b') mehrere seriell geschaltete Speichereinheiten (M1a, M2a, M3a; M1b, M2b, M3b, ...) vorgesehen sind, in die die betreffenden Daten zu bestimmten aufeinanderfolgenden Zeitpunkten (t1, t2, t3, ..., tn) sequentiell eingeschrieben werden und dass der Komparator (CMP) überprüft, ob wenigstens zwei einander nachfolgende Wertepaare (aₜ₁, a'ₜ₁, und aₜ₂, a'ₜ₂ oder aₜ₂, a'ₜ₂, und aₜ₃, a'ₜ₃ bzw. bₜ₁, b'ₜ₁, und bₜ₂, b'ₜ₂ oder bₜ₂, b'ₜ₂, und bₜ₃, b'ₜ₃ bzw. aₜ₁, bₜ₁, und aₜ₂, bₜ₂ oder aₜ₂, bₜ₂, und aₜ₃, bₜ₃ bzw. dAₜ₂, dBₜ₂ oder dAₜ₂, dBₜ₂, und dAₜ₃, dBₜ₃) den zu überprüfenden Nutz- und Referenzdaten (dA, dB, a, b, a', b') entsprechen.

10. Vorrichtung zur Übertragung von Nutzdaten (d; dA, dB) von einer Nachrichtenquelle (NQ) zu einer Nachrichtensenke (NS) von wenigstens einem Sender (TKA, TKB) parallel über eine Übertragungsstrecke mit wenigstens zwei Kanäle (KA, KB) zu wenigstens einem Empfänger (RKA, RKB), wobei die zu übertragenden Nutzdaten ausserdem zu wenigstens einem Referenzdatengenerator (RG, RGA, RGB) zuführbar sind und der Referenzdatengenerator (RG, RGA, RGB) mit dem Sender (TKA, TKB) verbunden ist zur Übertragung von Referenzdaten (a, b) über die Kanäle (KA, KB) und wobei der Empfänger mit einem Komparator (CMP) verbunden ist, dem die übertragenen Daten (d, dA, dB) zuführbar sind, **dadurch gekennzeichnet**, dass die vom Referenzdatengenerator (RG, RGA, RGB) abgegebenen Referenzdaten (a, b) in erste (a) und zweite Referenzdaten (b) gegliedert sind und abhängig von den Nutzdaten (d; dA, dB) und abhängig von einem Ereignis bestimmt sind, das beim Eintreffen der zugehörigen Nutzdaten (d; dA, dB) eingetreten ist, dass über den ersten Kanal (KA) erste (a) und zweite Referenzdaten (b) und über den zweiten Kanal (KB) zweite (b) und erste Referenzdaten (a) übertragbar sind, und dass die an den Empfänger (RKA, RKB) übertragenen Referenzdaten (a, a'; b, b') ebenfalls dem Komparator (CMP) zugeführbar sind, der die Referenzdaten (a, a', b, b') miteinander vergleicht oder auf Korrektheit überprüft.

11. Vorrichtung zur Übertragung von Nutzdaten (d; dA, dB) von einer Nachrichtenquelle (NQ) zu einer Nachrichtensenke (NS) von wenigstens einem Sender (TKA, TKB) parallel über eine Übertragungsstrecke mit wenigstens zwei Kanäle (KA, KB) zu wenigstens einem Empfänger (RKA, RKB), wobei die zu übertragenden Nutzdaten ausserdem zu wenigstens einem Referenzdatengenerator (RG, RGA, RGB) zuführbar sind und der Referenzdatengenerator (RG, RGA, RGB) mit dem Sender (TKA, TKB) verbunden ist zur Übertragung von Referenzdaten (a, b) über die Kanäle (KA, KB) und wobei der Empfänger mit einem Komparator (CMP) verbunden ist, dem die übertragenen Daten (d, dA, dB) zuführbar sind, **dadurch gekennzeichnet**, dass die vom Referenzdatengenerator (RG, RGA, RGB) abgegebenen Referenzdaten (a, b) in erste (a) und zweite Referenzdaten (b) gegliedert sind und abhängig von den Nutzdaten (d; dA, dB) und abhängig von einem Ereignis bestimmt sind, das beim Eintreffen der zugehörigen Nutzdaten (d; dA, dB) eingetreten ist, dass über den ersten Kanal (KA) erste Referenzdaten (a) und über den zweiten Kanal (KB) zweite Referenzdaten (b) übertragbar sind, und dass die an den Empfänger (RKA, RKB) übertragenen Referenzdaten (a ; b) ebenfalls dem Komparator (CMP) zuführbar sind, der die Referenzdaten (a, b) miteinander vergleicht oder auf Korrektheit überprüft.

12. Vorrichtung nach Anspruch 10 oder 11, **dadurch gekennzeichnet**, dass physikalisch nur ein Sender (TK) und nur ein Empfänger (RK) vorgesehen sind und dass die beiden Kanäle durch Zeitmultiplexbetrieb in dazu vorgesehenen Zeitschlitzen gebildet werden.

13. Vorrichtung nach Anspruch 10 oder 11, **dadurch gekennzeichnet**, dass der erste Kanal (KA) einem ersten Sender (TKA) und der zweite Kanal (KB) einem zweiten Sender (TKB) zugeordnet ist.

14. Vorrichtung nach einem der Ansprüche 10 bis 13, **dadurch gekennzeichnet**, dass im Komparator (CMP) jene übertragenen Referenzdaten (a, a', b, b') paarweise vergleichbar oder auf Korrektheit überprüfbar sind, die nicht im gleichen Kanal übertragen wurden.

15. Vorrichtung nach einem der Ansprüche 10 bis 14, **dadurch gekennzeichnet**, dass die Referenzdaten (a, b) im Referenzdatengenerator (RG; RGA, RGB) in Abhängigkeit des beim Eintreffen der Nutzdaten (dA, dB) gültigen Standes eines Zählers (CTR) generierbar sind, welcher die absolute Ortszeit, die relative Zeitdauer seit dem letzten Wechsel eines Signalbegriffs, die Dauer der Präsenz des vorangegangenen Signalbegriffs oder die Anzahl Wechsel von in den Nutzdaten enthaltenen Zustände oder die Anzahl Wechsel von Signalbegriffen zählt, die seit Inbetriebnahme der Übertragungsvorrichtung aufgetreten sind und dass der Zähler (CTR) mit dem Referenzdatengenerator (RG; RGA, RGB) verbunden ist.

16. Vorrichtung nach Anspruch 15, **dadurch gekennzeichnet**, dass ein Wertebereich für die Referenzdaten (a, b) vorgesehen ist, aus dem in den Referenzdatengeneratoren (RG; RGA, RGB) jeweils Werte auswählbar sind, die den festgestellten fehlerfreien und/oder fehlerbehafteten Zuständen entsprechen und dass der Komparator (CMP) geeignet ist, festzustellen, ob die übertragenen Referenzdaten (a, b) einem Wert des vorgegebenen Wertebereichs entsprechen, der einen fehlerfreien oder fehlerbehafteten Zustand anzeigt.

17. Vorrichtung nach einem der Ansprüche 10 bis 16, **dadurch gekennzeichnet**, dass in beiden Kanälen (KA, KB) identische Nutzdaten (dA, dB) übertragbar und dem Komparator (CMP) zuführbar sind, wobei diese identischen Nutzdaten (dA, dB) durch Komparator (CMP) miteinander vergleichbar oder auf Korrektheit überprüftbar sind und/oder dass in den Nutzdaten (dA, dB) ergänzend ein Prüfwort vorgesehen ist, das durch den Komparator (CMP) überprüfbar ist.

18. Vorrichtung nach einem der Ansprüche 10 bis 17, **dadurch gekennzeichnet**, dass im Komparator (CMP) für wenigstens einen Teil der zu überprüfenden Nutz- und Referenzdaten (dA, dB, a, b, a', b') mehrere seriell geschaltete Speichereinheiten (M1a, M2a, M3a; M1b, M2b, M3b, ...) vorgesehen sind, in die die betreffenden Daten zu bestimmten aufeinanderfolgenden Zeitpunkten (t1, t2, t3, ..., tn) sequentiell einschreibbar sind und dass der Komparator (CMP) überprüft, ob wenigstens zwei einander nachfolgende Wertepaare (aₜ₁, a'ₜ₁, und aₜ₂, a'ₜ₂ oder aₜ₂, a'ₜ₂, und aₜ₃, a'ₜ₃ bzw. bₜ₁, b'ₜ₁, und bₜ₂, b'ₜ₂ oder bₜ₂, b'ₜ₂, und bₜ₃, b'ₜ₃ bzw. aₜ₁, bₜ₁, und aₜ₂, bₜ₂ oder aₜ₂, bₜ₂, und aₜ₃, bₜ₃ bzw. dAₜ₂, dBₜ₂ oder dAₜ₂, dBₜ₂, und dAₜ₃, dBₜ₃) den zu überprüfenden Nutz- und Referenzdaten (dA, dB, a, b, a', b') entsprechen.

## Claims

1. Method for transmitting user data (d; dA, dB) from an information source (NQ) to an information sync (NS) from at least one transmitter (TKA, TKB) in parallel via a transmission path having at least two channels (KA, KB) to at least one receiver (RKA, RKB), with the user data to be transmitted also being supplied to at least one reference data generator (RG, RGA, RGB) which emits to the transmitter (TKA, TKB) reference data (a, b) for transmission via the channels (KA, KB), and with the transmitted data (d, dA, dB) being supplied from the receiver to a comparator (CMP), **characterized** in that the reference data (a, b) emitted from the reference data generator (RG, RGA, RGB) are broken down into first (a) and second reference data items (b) and, depending on the user data (d; dA, dB) and depending on an event which occurred when the associated user data (d; dA, dB) arrived, in that first (a) and second reference data items (b) are transmitted via the first channel (KA), and second (b) and first reference data items (a) are transmitted via the second channel (KB), and in that the reference data (a, a'; b, b') transmitted to the receiver (RKA, RKB) are likewise supplied to the comparator (CMP) which compares the reference data items (a, a', b, b') with one another, or checks them for correctness.

2. Method for transmitting user data (d; dA, dB) from an information source (NQ) to an information sync (NS) from at least one transmitter (TKA, TKB) in parallel via a transmission path having at least two channels (KA, KB) to at least one receiver (RKA, RKB), with the user data to be transmitted also being supplied to at least one reference data generator (RG, RGA, RGB) which emits to the transmitter (TKA, TKB) reference data (a, b) for transmission via the channels (KA, KB), and with the transmitted data (d, dA, dB) being supplied from the receiver to a comparator (CMP), **characterized** in that the reference data (a, b) emitted from the reference data generator (RG, RGA, RGB) are broken down into first (a) and second reference data items (b) and, depending on the user data (d; dA, dB) and depending on an event which occurred when the associated user data (d; dA, dB) arrived, in that first reference data items (a) are transmitted via the first channel (KA) and second reference data items (b) are transmitted via the second channel (KB), and in that the reference data (a, b) transmitted to the receiver (RKA, RKB) are likewise supplied to the comparator (CMP) which compares the reference data items (a, b) with one another, or checks them for correctness.

3. Method according to Claim 1 or 2, **characterized** in that, physically, only one transmitter (TK) and only one receiver (RK) are provided, and in that the two channels are formed by time-division multiplex operation in timeslots provided for this purpose.

4. Method according to Claim 1 or 2, **characterized** in that the first channel (KA) is allocated to a first transmitter (TKA), and the second channel (KB) is allocated to a second transmitter (TKB).

5. Method according to one of Claims 1 to 4, **characterized** in that those transmitted reference data items (a, a', b, b') which were not transmitted in the same channel are compared or are checked for correctness in pairs in the comparator (CMP).

6. Method according to one of Claims 1 to 5, **characterized** in that the reference data (a, b) are generated in the reference data generator (RG; RGA, RGB) as a function of that state of the counter (CTR) which is valid when the user data (dA, dB) arrive, which counter counts the absolute local time, the relative time period since the last change in a signal term, the duration of the presence of a previous signal term, the number of changes of states contained in the user data or the number of changes of signal terms which have occurred since the transmission apparatus on which this is based was brought into use.

7. Method according to Claim 6, **characterized** in that a value range is provided for the reference data (a, b), from which range values are in each case chosen in the reference data generators (RG; RGA, RGB), which values correspond to fault-free and/or faulty states which have been found, and in that, after data transmission, the comparator (CMP) checks whether the transmitted reference data (a, b) correspond to a value in the predetermined value range which indicates a fault-free or faulty state.

8. Method according to one of Claims 1 to 7, **characterized** in that identical user data (dA, dB) are transmitted in both channels (KA, KB) and are supplied to the comparator (CMP), which compares these identical user data items (dA, dB) with one another or checks them for correctness, and/or in that a check word is also provided in the user data (dA, dB) and is checked by the comparator (CMP).

9. Method according to one of Claims 1 to 8, **characterized** in that a number of series-connected memory units (M1a, M2a, M3a; Mlb, M2b, M3b,...) are provided in the comparator (CMP) for at least some of the user and reference data items (dA, dB, a, b, a', b') to be checked, to which memory units the relevant data relating to specific successive times (tl, t2, t3,...,tn) are written sequentially, and in that the comparator (CMP) checks whether at least two value pairs (aₜ₁, a'ₜ₁, and aₜ₂, a'ₜ₂ or aₜ₂, a'ₜ₂, and aₜ₃, a'ₜ₃ and/or bₜ₁, b'ₜ₁, and bₜ₂, b'ₜ₂ or bₜ₂/ b'ₜ₂, and bₜ₃, b'ₜ₃ and/or aₜ₁, bₜ₁, and aₜ₂, bₜ₂ or a_{tz}, b_{tz}, and aₜ₃, bₜ₃, and/or dAₜ₂, dBₜ₂ or dAₜ₂, dBₜ₂, and dAₜ₃, dBₜ₃) which follow one another correspond to the user and reference data items (dA, dB, a, b, a', b') to be checked.

10. Apparatus for transmitting user data (d; dA, dB) from an information source (NQ) to an information sync (NS), from at least one transmitter (TKA, TKB) in parallel via a transmission path having at least two channels (KA, KB) to at least one receiver (RKA, RKB), in which case the user data to be transmitted can also be supplied to at least one reference data generator (RG, RGA, RGB), and the reference data generator (RG, RGA, RGB) is connected to the transmitter (TKA, TKB) for transmission of reference data (a, b) via the channels (KA, KB), and in which case the receiver is connected to a comparator (CMP) to which the transmitted data (d, dA, dB) can be supplied, **characterized** in that the reference data (a, b) emitted from the reference data generator (RG, RGA, RGB) are broken down into first (a) and second reference data items (b) and, depending on the user data (d; dA, dB) and depending on an event which occurred when the associated user data (d; dA, dB) arrived, in that first (a) and second reference data items (b) can be transmitted via the first channel (KA), and second (b) and first reference data items (a) can be transmitted via the second channel (KB), and in that the reference data (a, a'; b, b') transmitted to the receiver (RKA, RKB) can likewise be supplied to the comparator (CMP) which compares the reference data items (a, a', b, b') with one another, or checks them for correctness.

11. Apparatus for transmitting user data (d; dA, dB) from an information source (NQ) to an information sync (NS), from at least one transmitter (TKA, TKB) in parallel via a transmission path having at least two channels (KA, KB) to at least one receiver (RKA, RKB), in which case the user data to be transmitted can also be supplied to at least one reference data generator (RG, RGA, RGB), and the reference data generator (RG, RGA, RGB) is connected to the transmitter (TKA, TKB) for transmission of reference data (a, b) via the channels (KA, KB), and in which case the receiver is connected to a comparator (CMP) to which the transmitted data (d, dA, dB) can be supplied, **characterized** in that the reference data (a, b) emitted from the reference data generator (RG, RGA, RGB) are broken down into first (a) and second reference data items (b) and, depending on the user data (d; dA, dB) and depending on an event which occurred when the associated user data (d; dA, dB) arrived, in that first reference data items (a) can be transmitted via the first channel (KA) and second reference data items (b) can be transmitted via the second channel (KB), and in that the reference data (a, b) transmitted to the receiver (RKA, RKB) can be likewise supplied to the comparator (CMP) which compares the reference data items (a, b) with one another, or checks them for correctness.

12. Apparatus according to Claim 10 or 11, **characterized** in that, physically, only one transmitter (TK) and only one receiver (RK) are provided, and in that the two channels are formed by time-division multiplex operation in timeslots provided for this purpose.

13. Apparatus according to Claim 10 or 11, **characterized** in that the first channel (KA) is allocated to a first transmitter (TKA), and the second channel (KB) is allocated to a second transmitter (TKB).

14. Apparatus according to one of Claims 10 to 13, **characterized** in that those transmitted reference data items (a, a', b, b') which were not transmitted in the same channel are compared or are checked for correctness in pairs in the comparator (CMP).

15. Apparatus according to one of Claims 10 to 14, **characterized** in that the reference data (a, b) are generated in the reference data generator (RG; RGA, RGB) as a function of that state of the counter (CTR) which is valid when the user data (dA, dB) arrive, which counter counts the absolute local time, the relative time period since the last change in a signal term, the duration of the presence of a previous signal term, the number of changes of states contained in the user data or the number of changes of signal terms which have occurred since the transmission apparatus was brought into use, and in that the counter (CTR) is connected to the reference data generator (RG; RGA, RGB).

16. Apparatus according to Claim 15, **characterized** in that a value range is provided for the reference data (a, b), from which range values can in each case be chosen in the reference data generators (RG; RGA, RGB), which values correspond to fault-free and/or faulty states which have been found, and in that the comparator (CMP) is suitable for determining whether the transmitted reference data (a, b) correspond to a value in the predetermined value range which indicates a fault-free or faulty state.

17. Apparatus according to one of Claims 10 to 16, **characterized** in that identical user data (dA, dB) can be transmitted and can be supplied to the comparator (CMP) in both channels (KA, KB) in which case these identical user data items (dA, dB) can be compared with one another or can be checked for correctness by the comparator (CMP), and/or in that a check word is also provided in the user data (dA, dB) and can be checked by the comparator (CMP).

18. Apparatus according to one of Claims 10 to 17, **characterized** in that a number of series-connected memory units (M1a, M2a, M3a; Mlb, M2b, M3b,...) are provided in the comparator (CMP) for at least some of the user and reference data items (dA, dB, a, b, a', b') to be checked, to which memory units the relevant data relating to specific successive times (t1, t2, t3, ...,tn) can be written sequentially, and in that the comparator (CMP) checks whether at least two value pairs (aₜ₁, a'ₜ₁, and aₜ₂, a'ₜ₂ or aₜ₂, a'ₜ₂, and aₜ₃, a'ₜ₃ and/or bₜ₁, b'ₜ₁, and bₜ₂, b'ₜ₂ or bₜ₂, b'ₜ₂, and bₜ₃, b'ₜ₃ and/or aₜ₁, bₜ₁, and aₜ₂, bₜ₂ or aₜ₂, bₜ₂, and aₜ₃, bₜ₃, and/or dAₜ₂, dBₜ₂ or dAₜ₂, dBₜ₂, and dAₜ₃, dBₜ₃) which follow one another correspond to the user and reference data items (dA, dB, a, b, a', b') to be checked.

## Revendications

1. Procédé de transfert de données (d ; dA, dB) utiles d'une source (NQ) de communication à un puits (NS) de communication par au moins un émetteur (TKA, TKB), en parallèle par l'intermédiaire d'une ligne de transmission comportant au moins deux voies (KA, KB), à au moins un récepteur (RKA, RKB), les données utiles à transmettre étant envoyées en outre à au moins un générateur (RG, RGA, RGB) de données de référence, qui fournit à l'émetteur (TKA, TKB) des données (a, b) de référence concernant le transfert par l'intermédiaire des voies (KA, KB), et les données (d, dA, dB) transmises étant envoyées du récepteur à un comparateur (CMP), caractérisé en ce que les données (a, b) de référence fournies par le générateur (RG, RGA, RGB) de données de référence sont décomposées en premières données (a) et deuxièmes données (b) de référence et sont déterminées en fonction des données (d ; dA, dB) utiles et en fonction d'un événement qui s'est produit lors de l'arrivée des données (d ; dA, dB) utiles associées, en ce qu'il est transmis par l'intermédiaire de la première voie (KA) des premières données (a) et des deuxièmes données (b) de référence et par l'intermédiaire de la deuxième voie (KB) des deuxièmes données (b) et des premières données (a) de référence, et en ce que les données (a, a'; b, b') de référence transmises au récepteur (RKA, RKB) sont envoyées également au comparateur (CMP) qui compare les données (a, a' ; b, b') de référence ou vérifie qu'elles sont correctes.

2. Procédé de transfert de données (d, dA, dB) utiles d'une source (NQ) de communication à un puits (NS) de communication par au moins un émetteur (TKA, TKB), en parallèle par l'intermédiaire d'une ligne de transmission comportant au moins deux voies (KA, KB), à au moins un récepteur (RKA, RKB), les données utiles à transférer étant envoyées en outre à au moins un générateur (RG, RGA, RGB) de données de référence qui fournit à l'émetteur (TKA, TKB) des données (a, b) de référence pour le transfert par l'intermédiaire des voies (KA, KB), et les données (d, dA, dB) transmises étant envoyées du récepteur à un comparateur (CMP), caractérisé en ce que les données (a, b) de référence fournies par le générateur (RG, RGA, RGB) de données de référence sont décomposés en premières données (a) et en secondes données (b) de référence et sont déterminées en fonction des données (d ; dA, dB) utiles et en fonction d'un événement qui s'est produit lors de l'arrivée des données (d, dA, dB) utiles associées, en ce qu'il est transmis par l'intermédiaire de la première voie (KA) des premières données (a) de référence et par l'intermédiaire de la deuxième voie (KB) des deuxièmes données (b) de référence et en ce que les données (a, b) de référence transmises au récepteur (RKA, RKB) sont envoyées également au comparateur (CMP) qui compare les unes aux autres les données (a, b) de référence ou vérifie qu'elles sont correctes.

3. Procédé suivant la revendication 1 ou 2, caractérisé en ce qu'il n'est prévu physiquement qu'un seul émetteur (TK) et qu'un seul récepteur (RK) et en ce que les deux voies sont formées par une exploitation à multiplexage dans le temps dans des créneaux temporels prévus à cet effet.

4. Procédé suivant la revendication 1 ou 2, caractérisé en ce que la première voie (KA) est associée à un premier émetteur (TKA) et la deuxième voie (KB) est associée à un deuxième émetteur (TKB).

5. Procédé suivant l'une des revendications 1 à 4, caractérisé en ce que, dans le comparateur (CMP), il est comparé par paire ou il est vérifié la correction de données (a, a', b, b') de référence transmises qui n'ont pas été transmises dans la même voie.

6. Procédé suivant l'une des revendications 1 à 5, caractérisé en ce que les données (a, b,) de référence sont générées dans le générateur (RG, RGA, RGB) de données de référence en fonction de l'état d'un compteur (CTR) en vigueur lors de l'arrivée des données (dA, dB) utiles, qui mesure l'heure locale absolue, la durée relative depuis le dernier changement d'un type de signal, la durée de la présence d'un type de signal précédent, le nombre de changements d'état contenus les données utiles ou le nombre de changements de type de signal qui sont apparus depuis la mise en fonction du dispositif de transfert qui est à la base.

7. Procédé suivant la revendication 6, caractérisé en ce qu'il est prévu pour les données (a, b) de référence un intervalle de valeurs dans lequel il est sélectionné dans les générateurs (RG, RGA, RGB) de données de référence, chaque fois des valeurs qui correspondent à des états constatés comme étant sans erreur et/ou comme étant entachés d'erreur, et en ce que, après le transfert de données, il est vérifié par le comparateur (CMP) si les données (a, b) de référence correspondent à une valeur de l'intervalle de valeurs prescrit qui indique un état sans erreur ou entaché d'erreurs.

8. Procédé suivant l'une des revendications 1 à 7, caractérisé en ce que des données (dA, dB) utiles identiques sont transmises dans les deux voies (KA, KB) et envoyées au comparateur (CMP) qui compare les unes aux autres ces données (dA, dB) identiques ou vérifie qu'elles sont correctes et/ou en ce qu'il est prévu comme complément dans les données (dA, dB) utiles un mot de vérification qui est vérifié par le comparateur (CMP).

9. Procédé suivant l'une des revendications 1 à 8, caractérisé en ce qu'il est prévu dans le comparateur (CMP), pour au moins une partie des données (dA, dB, a, b, a', b') utiles et de référence à vérifier, plusieurs unités (M1a, M2a, M3a ; M1b, M2b, M3b, ...) de mémoire qui sont branchées en série et dans lesquelles les données concernées sont écrites de manière séquentielle à des instants (t1, t2, t3, ..., tn) successifs déterminés, et en ce que le comparateur (CMP) vérifie si au moins deux paires (aₜ₁, a'ₜ₁, et aₜ₂, a'ₜ₂, ou aₜ₂, a'ₜ₂, et aₜ₃, a'ₜ₃ et bₜ₁, b'ₜ₁, et bₜ₂, b'ₜ₂ ou bₜ₂, b'ₜ₂, et bₜ₃, b'ₜ₃ ou aₜ₁, bₜ₁, et aₜ₂, bₜ₂ ou aₜ₂, bₜ₂, et aₜ₃, bₜ₃ ou dAₜ₂, dBₜ₂ ou dAₜ₂, dBₜ₂, et dAₜ₃, dBₜ₃) de valeurs qui se suivent l'une l'autre correspondent aux données (dA, dB, a, b, a', b') utiles et de référence à vérifier.

10. Dispositif de transmission de données (d ; dA, dB) utiles d'une source (NQ) de communication à un puits (NS) de communication par au moins un émetteur (TKA, TKB), en parallèle,par l'intermédiaire d'une ligne de transmission comportant au moins deux voies (KA, KB), à au moins un récepteur (RKA, RKB), les données utiles à transférer pouvant être envoyées en outre à au moins un générateur (RG, RGA, RGB) de données de référence et le générateur (RG, RGA, RGB) de données de référence étant relié à l'émetteur (TKA, TKB) pour la transmission de données (a, b) de référence par l'intermédiaire des voies (KA, KB), et le récepteur étant relié à un comparateur (CMP) auquel les données (d, dA, dB) transmises peuvent être envoyées, caractérisé en ce que les données (a, b) de référence fournies par le générateur (RG, RGA, RGB) de données de référence sont décomposées en premières données (a) et deuxièmes données (b) de référence et sont déterminées en fonction des données (d ; dA, dB) utiles et en fonction d'un événement qui s'est produit lors de l'arrivée des données (d ; dA, dB) utiles associées, en ce qu'il peut être transmis des premières données (a) et deuxièmes données (b) de référence par l'intermédiaire de la première voie (KA) et des deuxièmes données (b) et des premières données (a) de référence par l'intermédiaire de la deuxième voie (KB), et en ce que les données (a, a'; b, b') de référence transmises au récepteur (RKA, RKB) peuvent être envoyées également au comparateur qui compare les unes aux autres les données (a, a' b, b') de référence et vérifie qu'elles sont correctes.

11. Dispositif de transmission de données (d ; dA, dB) utiles d'une source (NQ) de communication à un puits (NS) de communication par au moins un émetteur (TKA, TKB), en parallèle par l'intermédiaire d'une ligne de transmission comportant au moins deux voies (KA, KB), à au moins un récepteur (RKA, RKB), les données utiles à transférer pouvant être envoyées en outre à au moins un générateur (RG, RGA, RGB) de données de référence et le générateur (RG, RGA, RGB) de données de référence étant relié à l'émetteur (TKA, TKB) pour la transmission de données (a, b) de référence par l'intermédiaire des voies (KA, KB), et le récepteur étant relié à un comparateur (CMP) auquel les données (d, dA, dB) transmises peuvent être envoyées, caractérisé en ce que les données (a, b) de référence fournies par le générateur (RG, RGA, RGB) de données de référence sont décomposées en premières données (a) et deuxièmes données (b) de référence et sont déterminées en fonction des données (d ; dA, dB) utiles et en fonction d'un événement qui s'est produit lors de l'arrivée des données (d ; dA, dB) utiles associées, en ce qu'il peut être transmis par l'intermédiaire de la première voie (KA) des premières données (a) de référence et par l'intermédiaire de la deuxième voie (KB) des deuxièmes données (b) de référence et en ce que les données (a ; b) de référence transmises au récepteur (RKA, RKB) peuvent être envoyées également au comparateur (CMP) qui compare les unes aux autres les données (a, b) de référence ou vérifie qu'elles sont correctes.

12. Dispositif suivant la revendication 10 ou 11, caractérisé en ce qu'il n'est prévu physiquement qu'un seul émetteur (TK) et un seul récepteur (RK) et en ce que les deux voies sont formées par fonctionnement à multiplexage dans le temps dans des créneaux temporels prévus à cet effet.

13. Dispositif suivant la revendication 10 ou 11, caractérisé en ce que la première voie (KA) est associée à un premier émetteur (TKA) et la deuxième voie (KB) est associée à un deuxième émetteur (TKB).

14. Dispositif suivant l'une des revendications 10 à 13, caractérisé en ce que, dans le comparateur (CMP) il est comparé par paire ou il est vérifié que sont correctes des données (a, a', b, b') de référence transmises qui n'ont pas été transmises dans la même voie.

15. Dispositif suivant l'une des revendications 10 à 14, caractérisé en ce que les données (a, b) de référence peuvent être générées dans le générateur (RG ; RGA, RGB) de données de référence en fonction de l'état d'un compteur (CTR) en vigueur à l'arrivée des données (dA, dB) utiles, qui mesure l'heure locale absolue, la durée relative depuis le dernier changement d'un type de signal, la durée de la présence du type de signal précédent ou le nombre de changements d'état contenus dans les données utiles ou le nombre de changements de type de signal qui sont apparus depuis la mise en service du dispositif de transfert et en ce que le compteur (CTR) est relié au générateur (RG ; RGA, RGB) de données de référence.

16. Dispositif suivant la revendication 15, caractérisé en ce qu'il est prévu un intervalle de valeurs pour les données (a, b) de référence dans lequel peuvent être sélectionnées dans le générateur (RG ; RGA, RGB) de données de référence des valeurs qui correspondent à des états constatés comme étant sans erreur et/ou comme étant entachés d'erreurs, et en ce que le comparateur (CMP) convient pour constater si les données (a, b) de référence transmises correspondent à une valeur de l'intervalle de valeurs prescrit qui indique un état sans erreur ou entaché d'erreurs.

17. Dispositif suivant l'une des revendications 10 à 16, caractérisé en ce que des données (dA, dB) utiles identiques peuvent être transmises dans les deux voies (KA, KB) et peuvent être envoyées au comparateur (CMP), ces données (dA, dB) utiles identiques étant comparées les unes aux autres par le comparateur (CMP) ou le comparateur vérifiant qu'elles sont correctes, et/ou en ce qu'il est prévu dans les données (dA, dB) utiles en complément, un mot de vérification qui peut être vérifié par le comparateur (CMP).

18. Dispositif suivant l'une des revendications 10 à 17, caractérisé en ce qu'il est prévu dans le comparateur (CMP), pour au moins une partie des données (dA, dB, a, b, a', b') utiles et de référence à vérifier, plusieurs unités (M1a, M2a, M3a ; M1b, M2b, M3b, ...) de mémoire qui sont branchées en série et dans lesquelles les données concernées peuvent être écrites de manière séquentielle à des instants (t1, t2, t3, ..., tn) successifs, et en ce que le comparateur (CMP) vérifie si au moins deux paires (aₜ₁, a'ₜ₁, et aₜ₂, a'ₜ₂ ou aₜ₂, a'ₜ₂, et aₜ₃, a'ₜ₃ et bₜ₁, b'ₜ₁, et bₜ₂, b'ₜ₂ ou bₜ₂, b'ₜ₂, et bₜ₃, b'ₜ₃ ou aₜ₁, bₜ₁, et aₜ₂, bₜ₂ ou aₜ₂, bₜ₂, et aₜ₃, bₜ₃ ou dAₜ₂, dBₜ₂ ou dAₜ₂, dBₜ₂, et dAₜ₃, dBₜ₃) de valeurs qui se suivent l'une l'autre correspondent aux données (dA, dB, a, b, a', b') utiles et de référence à vérifier.
